# EUROPEAN PATENT SPECIFICATION

(11) **EP 2 732 869 B1**
(45) Date of publication and mention of the grant of the patent: **25.10.2017**
(21) Application number: 12193399.8
(22) Date of filing: 20.11.2012
(51) Int. Cl.: B01F 5/06, B01F 5/04, B01F 3/04, F01N 3/20, F01N 3/28

(54) **Mixing arrangement and method for mixing for use in an exhaust system**
Mischanordnung und Mischverfahren zur Verwendung in einem Abgassystem
Dispositif de mélange et procédé pour utilisation dans un système d'échappement

(43) Date of publication of application: 21.05.2014
(73) Proprietor: Bosal Emission Control Systems NV, 3560 Lummen (BE)
(72) Inventor: De Maesschalck, Peter Hippoliet Madeleine, 9080 Lochristi (BE); Zidat, Saïd, 57100 Thionville (FR)
(74) Representative: Bohest AG

(56) References cited:
- EP-A1- 0 259 059
- EP-A1- 2 111 916
- WO-A1-2011/073717
- WO-A1-2012/052690
- WO-A1-2012/089290
- DE-A1-102009 036 511
- US-A- 2 213 614
- US-A1- 2011 258 989
- US-A1- 2012 096 948

## Description

The invention relates to mixing arrangements and methods for mixing a chemical substance with an exhaust fluid. The method and mixing arrangement may be applied in exhaust systems, for example of lean burn internal combustion engines.

Motor vehicles, especially vehicles with lean burn internal combustion engines are known for producing significant amounts of nitrogen oxides. In order to reduce or eliminate nitrogen oxides, ammonia, typically in the form of aqueous urea, is injected into the exhaust gas flow, where ammonia is created. Ammonia is then made to react with nitrogen oxides using a catalyst, for example in a catalytic converter. Nitrogen and water is produced according to the so called selective catalytic reduction process or SCR process. In order for this process to perform effectively, proper distribution of a proportional amount of urea or ammonia in the gas stream is required. It is known to arrange mixing elements inside an exhaust tube either before or after injection of a chemical substance for providing a good mixture of the injected substance and exhaust gas. However, injected urea tends to form deposits at pipe walls when these are still cold. Urea in deposits is not available for a chemical process but may be available in excess at a later time when temperature of the exhaust pipe wall has increased. Both effects influence the performance of the process. In addition, at temperatures below 200 degrees Celsius urea tends to crystallize such that no ammonia is produced and no effective mixing with exhaust gas or reaction may take place.

For example, the international patent publication WO 2012/052690 discloses a mixing arrangement according to the preamble of claim 1. It discloses a device for introducing a liquid additive into an exhaust system. In WO 2012/052690 two tubes are concentrically arranged and the liquid additive is injected through the wall of and into the inner tube. A portion of the exhaust gas flows along the outer wall of the inner tube, while the inner wall of the inner tube is provided to capture the injected liquid and to support its distribution to facilitate evaporation of the liquid. The inner tube is further provided with slits such that the end portion of the inner tube forms tongues to further support liquid film formation and desorption of the liquid additive. The inner tube further discloses helical ribs extending along the inner wall of the inner duct to make exhaust gas to rotate. This may, together with the tongues at the end of the inner tube, enhance mixing of the liquid additive and exhaust gas and support droplet formation at the tongues.

However, there is need to provide a mixing arrangement for use in an exhaust system and a method for mixing a chemical substance with exhaust fluid with improved performance. Especially, there is need for mixing arrangements and methods that allow for a more efficient nitrogen oxide aftertreatment, especially at cold start.

According to one aspect of the invention there is provided a mixing arrangement according to claim 1 for use in an exhaust system.

The mixing arrangement comprises an exhaust duct and a mixing duct arranged inside the exhaust duct. It further comprises a mixer configuration arranged inside the mixing duct. Even further the mixing arrangement comprises a gap arranged between mixing duct and exhaust duct, wherein the gap comprises an inlet opening adapted and arranged to enable an exhaust fluid to enter the gap for surrounding at least part of the length of the mixing duct.

The gap between mixing duct and exhaust duct may be filled with exhaust fluid entering the inlet opening arranged at the upstream end of the gap. The warm and increasingly heated up exhaust fluid directly warms up the mixing duct. By these means the time an inner wall in a mixing region is cold or at least at a temperature facilitating urea deposits and crystallization may significantly be reduced. Especially in the initial seconds of a starting process, for example of a diesel or lean burn internal combustion engine, high amounts of nitrogen oxide are emitted and also a catalytic converter is not yet at its operating temperature. Therefore, an optimization of a mixing process during this time period or a shortening of this time period may have a significant effect on nitrogen oxide emission.

The cross section of a duct, exhaust duct or mixing duct may be of a circular or oval shape such that the duct is formed by a pipe or tube with circular or oval cross section. However, also other duct shapes such as for example oval shapes having flattened tops and bottoms, rectangular or also non-symmetric shapes may be used in the mixing arrangements according to the invention.

The gap further comprises an outlet opening arranged at a downstream end of the gap. With the gap open at a downstream end, the exhaust fluid enters the gap at an upstream end, is guided along the gap and along the mixing duct and leaves the gap through the outlet opening at the downstream end. Preferably, the exhaust fluid, typically a gas, is guided at least along the length of the mixing duct where the mixer configuration is arranged. Preferably, the exhaust fluid is guided along the whole length of the mixing duct, thereby warming up the whole length of the mixing duct.

The mixer configuration comprises mixing elements directing from a side wall of the mixing duct towards an interior of the mixing duct. Mixing elements, for example blades or flaps, directing from the side wall of the mixing duct into the interior of the mixing duct allow for a high flexibility of the arrangement of the mixer configuration and for a simple manufacturing of a mixer configuration. For example, to meet required specifications of a mixing arrangement, the amount of mixing elements may be varied, an arrangement of mixing elements along a circumference and along a length of the mixing duct may be chosen individually. Also an alignment of the mixing elements (for example more or less tilted in or generally directed into a direction of flow) or size of mixing elements may be varied. Features of the mixing arrangement may be influenced, such features for example being pressure drop, back pressure, flow swirl, flow length mixing quality and cost. Mixing elements may be fixed to the interior of the mixing duct by conventional means known in the art such as for example welding. However, in the mixing arrangement according to the invention, the mixing elements are formed by portions of the side wall of the mixing duct. Mixing elements are directly manufactured, for example by punching, die cutting, extrusion or a combination thereof, from the wall of the mixing duct. The mixing duct may be partially cut or punched for example such as to create a wall portion that may be tilted out of the plane of the mixing duct wall and into the interior of the mixing duct. The mixing elements are then connected to the mixing duct wall by the non-cut or non-punched section. However, mixing elements may also be formed by cutting the mixing duct wall and extrude a wall portion on one side of the cut. In these embodiments, no separate attachment process for attaching mixing elements to the mixing duct is required. This is a simple and cost efficient way of manufacturing a mixing duct comprising an integrated mixer configuration.

An opening is provided in a side wall of the mixing duct. An opening in a side wall of the mixing duct allows exhaust fluid to flow from the gap into the interior of the mixing duct to mix with the mixture of exhaust fluid and chemical substance flowing in the mixing duct. A time and position where a re-joining of exhaust fluid flowing in the gap with the exhaust fluid flowing in the mixing duct is thereby advanced to a time and position before the end of the gap or of the mixing duct. This not only allows for an earlier mixing of all components flowing in the exhaust duct. It also allows introducing exhaust fluid to flow from the gap into the mixing duct at a position and into a volume with high turbulence due to the closeness of the mixing elements. A mixing behavior of the mixing arrangement may therefore be influenced. If mixing elements are directly manufactured out of the side wall of the mixing duct, the openings are directly created by this manufacturing step. Are no or less openings in the side wall of the mixing duct desired or required, the openings may be closed. This may be done for example by attaching a piece of material to the outside of the mixing duct wall to cover individual openings or for example also by providing an outer liner in the form of a closing duct in contact with the mixing duct to close all openings or openings arranged over a certain length of the mixing duct.

In another aspect of the mixing arrangement according to the invention, the mixing elements are arranged symmetrically around the inner circumference of the mixing duct. A symmetrical arrangement of mixing elements supports a symmetrical mixing over the cross section of the mixing duct and an even distribution of the gas flow in the exhaust duct.

In yet another aspect of the mixing arrangement according to the invention, a plurality of mixer configurations are arranged at a plurality of locations along the length of the mixing duct. With more than one mixer configuration arranged at different locations in an exhaust system the mixing of the chemical component and the exhaust fluid may further be optimized. This may especially be advantageous if an injected chemical component undergoes chemical reactions at different stages in the exhaust fluid. For example a mixer configuration close to an injection point mainly supports a mixing of the chemical component with the exhaust fluid, for example for urea decomposition. Another mixer configuration may for example be arranged close to a catalytic converter. Such a mixer configuration mainly supports a mixing in order to get a homogeneous gas flow distribution upon entering the catalytic converter.

In an aspect of the mixing arrangement according to the invention, the mixing arrangement comprises an injector for injecting a chemical substance into the exhaust duct. Preferably, the injector is arranged upstream of the mixing duct. An injection upstream of the mixing duct and therefore upstream of a mixer configuration allows for an injection and therefore to make use of the mixing action in the mixer configuration and in the turbulent flow after the mixer configuration. Preferably, the injector is arranged to direct a chemical substance to the interior of the mixing duct. By this, the chemical substance may be injected preferably only into the mixing duct. Any contact of the chemical substance with an exhaust duct wall before getting into the mixing duct and being mixed with exhaust fluid may be prevented.

A mixing device may be provided for use in the mixing arrangement as described above. The mixing device comprises a mixing duct and two end portions. The two end portions direct to the exterior of the mixing duct. At least one opening is arranged in an end portion wall. The mixing duct further comprises a plurality of mixing elements which direct towards an interior of the mixing duct.

A mixing device may be pre-manufactured and introduced into an exhaust duct of an existing exhaust system. The mixing device may be placed as one piece into an exhaust duct and fixed therein, for example through press fitting or welding. The mixing duct comprises the mixing elements and may also comprise openings. In some embodiments, a plurality of openings is provided in the wall of the mixing duct. The end portions direct to the exterior of the mixing duct, i.e. the end portions are arranged such as to comprise an end portion wall, which end portion wall is tilted outwardly from the side wall of the mixing duct. A tilt angle may range from between larger than degrees and smaller than 180 degrees. A length and tilt angle of an end portion defines the minimum width of a gap between the mixing duct and an exhaust duct. End portions may for example be formed as truncated cones, while the truncated top of the cone may be attached to the mixing duct. Such a truncated cone may be attached to the end of the mixing duct to lengthen the mixing duct by the length of the cone height but may also be arranged to reach over the mixing duct by the height of cone. In addition, the end portion wall is provided with at least one opening (if only one opening is present this is the inlet opening) for an exhaust fluid to pass through this at least one opening.

Advantages of the mixing device have been mentioned in connection with aspects of the mixing arrangement described above and will therefore not be repeated.

According to another aspect of the invention there is provided a method according to claim 5 for mixing a chemical substance with an exhaust fluid in an exhaust duct.

The advantages of the aspects of the method according to the invention have already been discussed in relation with the corresponding aspects of the mixing arrangement and will not be repeated.

In the method according to the invention, the step of providing a mixer configuration inside the mixing duct comprises providing mixing elements directing from a side wall of the mixing duct towards the interior of the mixing duct.

The method further comprises the step of providing the gap with an outlet opening at a downstream end of the gap. It further comprises the step of guiding exhaust fluid along the length of the mixing duct and out of the outlet opening.

The method further comprises the steps of providing an opening in the side wall of the mixing duct and allowing exhaust fluid to flow from the gap through the opening in the side wall into the mixing duct.

The chemical substance injected into the exhaust duct may be urea or ammonia and the exhaust fluid typically is exhaust fluid from a diesel or lean burn internal combustion engine.

The mixing arrangement according to the invention, the mixing device and the method according to the invention are preferably used in an exhaust system of a motor vehicle, such as motor vehicles comprising diesel engines, for examples diesel-engined cars and ships. However, the mixing arrangement and method may also be used in other applications, such as for example in industrial boilers, waste boilers or gas turbines. Injected chemical substances may therefore also be varied according to a user's need.

Further advantageous aspects of the mixing arrangement according to the invention become apparent from the following description of embodiments of the mixing arrangement and mixing device, which are further illustrated by the following figures, showing:
- Fig. 1: a cross section of a prior art urea mixing arrangement;
- Fig. 2: a cross section of a mixing arrangement according to the invention;
- Fig. 3: a cross section of another mixing arrangement;
- Fig. 4: a perspective view of a mixing device;
- Fig. 5: a side view of a mixing duct;
- Fig. 6: a cross section of a further mixing arrangement according to the invention.

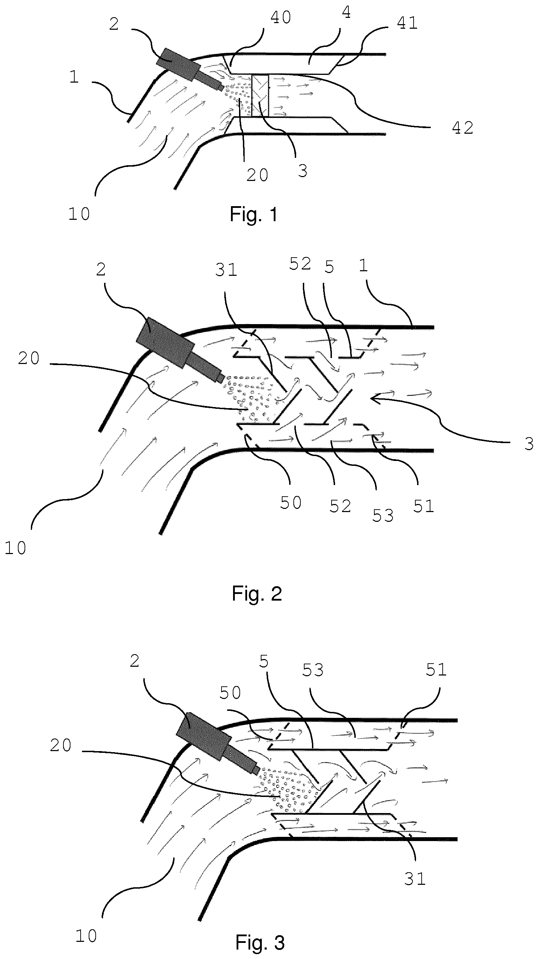

**Fig. 1** shows an exhaust duct 1 and an injector 2 for injecting a chemical substance 20, for example urea or ammonia, into an exhaust gas 10 flowing in the exhaust duct 1. A conventional mixer configuration 3 as known in the art, for example as disclosed in WO 2007/127529, is arranged inside exhaust duct 1 for a mixing of injected chemical substance 20 with exhaust gas 10. A conventional mixer configuration 3 is typically welded or form fitted into the exhaust duct 1. A closed cavity 4 containing air is arranged between mixer configuration 3 and exhaust duct 1. Air cavity 4 serves as isolation for the region inside the exhaust duct where urea is injected and initially mixed from outside temperatures. However, at start all components are at low temperature. Due to the isolating character of the cavity, a warming up of the walls of the cavity, especially of the inner wall 42 is very slow. A time period, in which crystallization of urea may occur and therefore a period of insufficient exhaust treatment downstream of the injection is still long. In addition, due to the cavity, the exhaust gas is forced to pass through the narrower path given by the diameter of the mixer configuration 3. In the drawing, gas flow is indicated with arrows. Depending on the arrangement of cavity 4 and mixer configuration 3, significant pressure drop and back pressure may occur.

In a basic embodiment of the mixing arrangement according to the invention the air cavity 4 is opened up at an inlet or upstream end 40 and preferably also at an outlet or downstream end 41. Thereby, a passage is provided for exhaust gas 10 to be guided into and along the cavity 4. The warm or hot exhaust gas is especially guided along the outer side of the inner wall 42, which inner side of the inner wall 42 the freshly injected urea and the not yet completely mixed mixture of urea and exhaust gas comes in contact with. The exhaust gas 10, while being at low temperatures at the start of for example an engine, warms up very fast. By providing a passageway through the cavity 4, the warmth or heat of the exhaust gas is immediately and directly used to warm up the environment the urea is injected as well as a mixing volume inside and downstream of the mixing configuration 3.

In **Fig. 2** a mixing duct 5 is arranged inside the exhaust duct 1. A circumferentially arranged gap 53 is formed between mixing duct 5 and exhaust duct 1. The gap 53 is provided with inlet openings 50 and outlet openings 51 at an upstream end of the gap and at a downstream end of the gap. A portion of the exhaust gas flowing in the region along the exhaust pipe walls enters gap 53 at the inlet opening 50 and flows through the gap along mixing duct 5 thereby warming up the mixing duct. At least a part of the portion of the exhaust gas, preferably a small portion that has entered the gap 53 through the inlet openings 50 will leave the gap again through the outlet openings 51. The mixing duct 5 is provided with mixing elements 31, for example blades or flaps, directing into the interior of the mixing duct and into a flow direction. The flaps 31 are arranged such as to form a path where the exhaust fluid and the chemical substance may pass.

The mixing duct is further provided with openings 52 in its side wall. At least a part of the portion of exhaust gas flowing through gap 53 will enter the mixing duct 5 through openings 52. There, said part of the exhaust gas 10 will be reunited with another portion of the exhaust gas that has directly entered the mixing duct 5. The sideways flow of exhaust gas entering mixing duct 5 through openings 52 may additional provide a turbulent flow and support mixing. Preferably the flaps 31 are directly formed of the side wall of mixing duct 5 through for example cutting and inside bending or press-forming. Thereby openings 52 are also directly formed by the manufacturing process of the flaps 31.

In **Fig. 3** a variant of the mixing duct 5 as shown in Fig. 2 is illustrated. Same reference numerals refer to the same or similar features. The mixing duct 5 in Fig. 3 is a closed duct, not provided with openings 52 in the side wall. An exhaust gas flow 10 entering gap 53 flows along the gap along the whole length of the mixing duct 5 and leaves the gap through the outlet opening 51. The mixing elements 31 may be separate elements attached to the inner side of the mixing duct 5. However, also in this embodiment, mixing elements 31 may be directly formed from parts of the mixing duct wall. Openings generated by such a process are then closed off again, for example by providing material pieces and attaching them over the openings or by providing a second lining duct in the form of an outer liner, lining the mixing duct and thereby closing off any openings in the mixing duct wall.

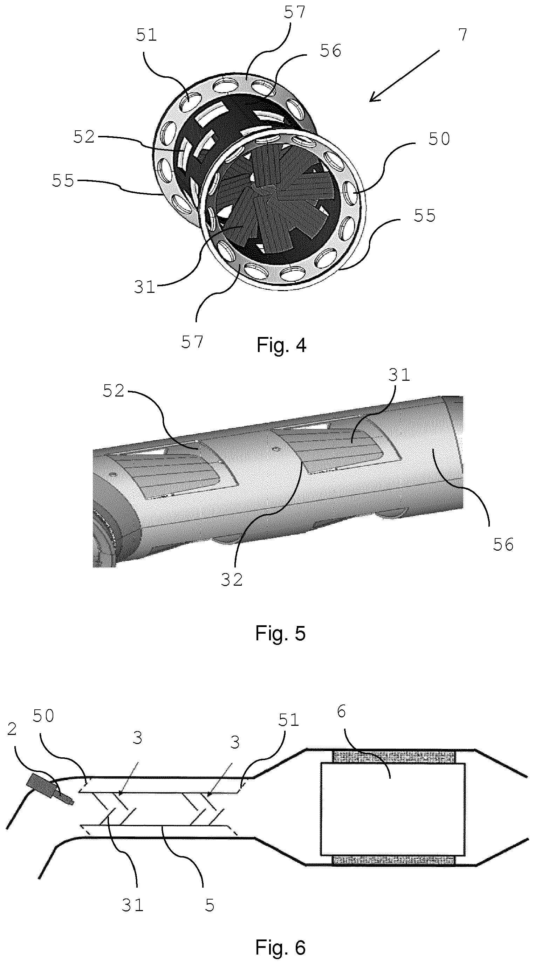

In **Fig. 4** a mixing device 7 for use in an exhaust system of for example a diesel or lean burn internal combustion engine is shown. The mixing device 7 has a middle tube portion 56 forming a mixing duct and two conically formed end portions 57. End portions 57 extend from the tube portion 56 in opposite directions and are tilted to the exterior of tube portion 56. A plurality of openings 50, 51 such as holes or bores are provided in end portions 57. Openings 50, 51 in end portions 57 are regularly arranged in the wall of the end portions.

In the interior of the tube portion 56 a plurality of flaps 31 is arranged around the inner circumference of the tube portion partially overlapping. Flaps 31 are formed by parts of the wall of the tube portion 56, for example by punching or die cutting. At the corresponding locations the tube portion 56 is provided with openings 52. Flaps 31 extend inwardly, preferably in a tilted manner and in less than a radial direction. In a mounted state, flaps 31 preferably direct into a flow direction. By varying the amount of flaps 31 and its arrangements, as well as the amount of openings 52 in tube portion 56, a mixing of exhaust gas and chemical substance flowing through the mixing device 7 may be influenced.

## Claims

1. Mixing arrangement for use in an exhaust system, the mixing arrangement comprising an exhaust duct (1) and a mixing duct (5) arranged inside the exhaust duct, further comprising a mixer configuration (3) arranged inside the mixing duct (5), the mixing arrangement further comprising a gap (53) arranged between mixing duct (5) and exhaust duct (1), wherein the gap (53) comprises an inlet opening (50) adapted to enable a portion of an exhaust fluid (10) to enter the gap (53) through the inlet opening (50) for surrounding at least part of the length of the mixing duct (5), while another portion of the exhaust fluid may flow into the mixing duct (5), wherein the gap (53) further comprises an outlet opening (51) arranged at a downstream end of the gap (53), wherein the mixer configuration (3) comprises mixing elements (31) directing from a side wall (42, 56) of the mixing duct (5) towards an interior of the mixing duct, and wherein an opening (52) is provided in a side wall (42,56) of the mixing duct (5) allowing exhaust fluid to flow from the gap into the interior of the mixing duct, **characterized in that** the mixing elements (31) are made of portions of the side wall (42,56) of the mixing duct (5).

2. Mixing arrangement according any one of the preceding claims, wherein the mixing elements (31) are arranged symmetrically around the inner circumference of the mixing duct (5).

3. Mixing arrangement according to any one of the preceding claims, wherein a plurality of mixer configurations (3) is arranged at a plurality of locations along the length of the mixing duct (5).

4. Mixing arrangement according to any one of the preceding claims, further comprising an injector (2) for injecting a chemical substance (20) into the exhaust duct (1), the injector (2) being arranged upstream of the mixing duct (5).

5. Method for mixing a chemical substance (20) with an exhaust fluid (10) in an exhaust duct (1) using a mixing arrangement according to any one of claims 1 to 4, comprising the steps of
- providing an exhaust duct (1) and a mixing duct (5),
- arranging the mixing duct (5) inside the exhaust duct (1) thereby creating a gap (53) between mixing duct (5) and exhaust duct (1), and providing the gap (53) with an inlet opening (50),
- providing a mixer configuration (3) inside the mixing duct (5),
- guiding an exhaust fluid (10) through the exhaust duct (1), such that one portion of the exhaust fluid flows into the mixing duct (5) and another portion of the exhaust fluid (10) flows through the inlet opening (50) into the gap (53) between mixing duct (5) and exhaust duct (1),
- injecting a chemical substance (20) into the exhaust duct (5) and mixing the chemical substance (20) and the one portion of the exhaust fluid (10) in the mixing duct (5), and
- providing an opening (52) in a side wall (42,56) of the mixing duct (5) and allowing exhaust fluid (10) to flow from the gap (53) through the opening (52) in the side wall (42,56) into the mixing duct (5), wherein the step of providing a mixer configuration (3) inside the mixing duct (5) comprises providing mixing elements (31) directing from the side wall (42,56) of the mixing duct (5) towards the interior of the mixing duct (5), and
- providing the gap (53) with an outlet opening (51) at a downstream end of the gap (53) and guiding exhaust fluid (10) along the length of the mixing duct (5) and out of the gap (53) at the outlet opening (50).

6. Method according to claim 5, wherein the step of injecting a chemical substance (20) comprises injecting the chemical substance upstream of the mixer configuration (3).

7. Method according to any one of claims 5 to 6, wherein the step of injecting a chemical substance (20) comprises injecting urea or ammonia.

## Patentansprüche

1. Mischanordnung zur Verwendung in einem Abgassystem, wobei die Mischanordnung einen Abgaskanal (1) und einen innerhalb des Abgaskanals angeordneten Mischkanal (5) umfasst, sowie ferner eine innerhalb des Mischkanals (5) angeordnete Mischerkonfiguration (3) umfasst, die Mischanordnung umfasst des Weiteren einen zwischen dem Mischkanal (5) und dem Abgaskanal (1) angeordneten Spalt (53), wobei der Spalt (53) eine Einlassöffnung (50) aufweist, die angepasst ist um einem Teil eines Abgasfluids (10) das Eintreten in den Spalt (53) durch die Einlassöffnung (50) zu ermöglichen, um zumindest einen Teil der Länge des Mischkanals (5) zu umgeben, während ein anderer Teil des Abgasfluids in den Mischkanal (5) strömen kann, wobei der Spalt (53) des Weiteren eine an einem stromabwärtigen Ende des Spalts (53) angeordnete Auslassöffnung (51) aufweist, wobei die Mischerkonfiguration (3) von einer Seitenwand (42, 56) des Mischkanals (5) zu einem Inneren des Mischkanals gerichtete Mischelemente (31) aufweist, und wobei eine Öffnung (52) in einer Seitenwand (42, 56) des Mischkanals (5) vorgesehen ist, die ermöglicht, dass Abgasfluid vom Spalt (53) ins Innere des Mischkanals fliesst,
**dadurch gekennzeichnet, dass** die Mischelemente (31) aus Teilen der Seitenwand (42, 56) des Mischkanals (5) gemacht sind.

2. Mischanordnung gemäss einem der vorhergehenden Ansprüche, wobei die Mischelemente (31) symmetrisch um den inneren Umfang des Mischkanals (5) angeordnet sind.

3. Mischanordnung gemäss einem der vorhergehenden Ansprüche, wobei eine Vielzahl an Mischerkonfigurationen (3) an mehreren Stellen entlang der Länge des Mischkanals (5) angeordnet ist.

4. Mischanordnung gemäss einem der vorhergehenden Ansprüche, welche des Weiteren einen Injektor (2) zum Injizieren einer chemischen Substanz (20) in den Abgaskanal (1) umfasst, wobei der Injektor (2) stromaufwärts des Mischkanals (5) angeordnet ist.

5. Verfahren zum Mischen einer chemischen Substanz (20) mit einem Abgasfluid (10) in einem Abgaskanal (1) unter Verwendung einer Mischanordnung gemäss einem der Ansprüche 1 bis 4, umfassend die Schritte
- Bereitstellen eines Abgaskanals (1) und eines Mischkanals (5),
- Anordnen des Mischkanals (5) innerhalb des Abgaskanals (1), dadurch Bilden eines Spalts (53) zwischen dem Mischkanal (5) und dem Abgaskanal (1), und Versehen des Spalts (53) mit einer Einlassöffnung (50),
- Bereitstellen einer Mischerkonfiguration (3) innerhalb des Mischkanals (5),
- Leiten eines Abgasfluids (10) durch den Abgaskanal (1), so dass ein Teil des Abgasfluids in den Mischkanal (5) fliesst und ein anderer Teil des Abgasfluids (10) durch die Einlassöffnung (50) in den Spalt (53) zwischen dem Mischkanal (5) und dem Abgaskanal (1) fliesst,
- Einspritzen einer chemischen Substanz (20) in den Abgaskanal (5) und Mischen der chemischen Substanz (20) mit dem einen Teil des Abgasfluids (10) im Mischkanal (5), und
- Vorsehen einer Öffnung (52) in einer Seitenwand (42, 56) des Mischkanals (5) und Zulassen, dass das Abgasfluid (10) vom Spalt (53) durch die Öffnung (52) in der Seitenwand (42, 56) in den Mischkanal (5) fliesst, wobei der Schritt des Bereitstellens einer Mischerkonfiguration (3) innerhalb des Mischkanals (5) das Bereitstellen von Mischelementen (31), die von der Seitenwand (42, 56) des Mischkanals (5) zum Inneren des Mischkanals (5) führen, umfasst, und
- Versehen des Spalts (53) mit einer Auslassöffnung (51) an einem stromabwärtigen Ende des Spalts (53) und Leiten des Abgasfluids (10) entlang der Länge des Mischkanals (5) und an der Auslassöffnung (50) aus dem Spalt (53) heraus.

6. Verfahren nach Anspruch 5, wobei der Schritt des Injizierens einer chemischen Substanz (20) das Injizieren der chemischen Substanz stromaufwärts der Mischerkonfiguration (3) umfasst.

7. Verfahren nach einem der Ansprüche 5 bis 6, wobei der Schritt des Injizierens einer chemischen Substanz (20) das Injizieren von Harnstoff oder Ammoniak umfasst.

## Revendications

1. Dispositif de mélange pour utilisation dans un système d'échappement, le dispositif de mélange comprenant un conduit d'échappement (1) et un conduit de mélange (5) agencé à l'intérieur du conduit d'échappement, comprenant en outre une configuration de mélangeur (3) agencée à l'intérieur du conduit de mélange (5), le dispositif de mélange comprenant en outre un interstice (53) agencé entre le conduit de mélange (5) et le conduit d'échappement (1), dans lequel l'interstice (53) comprend une ouverture d'entrée (50) adaptée pour permettre à une partie d'un fluide d'échappement (10) entrer dans l'interstice (53) par l'ouverture d'entrée (50) pour entourer au moins une partie de la longueur du conduit de mélange (5), tandis qu'une autre partie du fluide d'échappement peut s'écouler dans la conduite de mélange (5), dans lequel l'interstice (53) comprend en outre une ouverture de sortie (51) agencée à une extrémité aval de l'interstice (53), dans lequel la configuration de mélangeur (3) comprend des éléments de mélange (31) dirigeant d'une paroi latérale (42, 56) du conduit de mélange (5) vers un intérieur du conduit de mélange, et dans lequel une ouverture (52) est prévue dans une paroi latérale (42, 56) du conduit de mélange (5) permettant au fluide d'échappement de s'écouler de l'interstice vers l'intérieur du conduit de mélange,
**caractérisé en ce que** les éléments de mélange (31) sont constitués de parties de la paroi latérale (42, 56) du conduit de mélange (5).

2. Dispositif de mélange selon l'une quelconque des revendications précédentes, dans lequel les éléments de mélange (31) sont agencés de manière symétrique autour de la circonférence intérieure du conduit de mélange (5).

3. Dispositif de mélange selon l'une quelconque des revendications précédentes, dans lequel une pluralité de configurations de mélangeur (3) est agencée à plusieurs endroits le long de la longueur du conduit de mélange (5).

4. Dispositif de mélange selon l'une quelconque des revendications précédentes, comprenant en outre un injecteur (2) pour injecter une substance chimique (20) dans le conduit d'échappement (1), l'injecteur (2) étant agencé en amont du conduit de mélange (5).

5. Procédé pour mélanger une substance chimique (20) avec un fluide d'échappement (10) dans un conduit d'échappement (1) en utilisant un dispositif de mélange selon l'une quelconque des revendications 1 à 4, comprenant les étapes de
- fournir un conduit d'échappement (1) et un conduit de mélange (5),
- agencer le conduit de mélange (5) à l'intérieur du conduit d'échappement (1), créant ainsi un interstice (53) entre le conduit de mélange (5) et le conduit d'échappement (1), et pourvour l'interstice (53) d'une ouverture d'entrée (50),
- pourvoir une configuration de mélangeur (3) à l'intérieur du conduit de mélange (5),
- guider un fluide d'échappement (10) au travers le conduit d'échappement (1) de sorte qu'une partie du fluide d'échappement s'écoule dans le conduit de mélange (5) et une autre partie du fluide d'échappement (10) s'écoule au travers de l'ouverture d'entrée (50) dans l'interstice (53) entre le conduit de mélange (5) et le conduit d'échappement (1),
- injecter une substance chimique (20) dans le conduit d'échappement (5) et mélanger la substance chimique (20) et la partie de fluide d'échappement (10) dans le conduit de mélange (5), et
- prévoir une ouverture (52) dans une paroi latérale (42, 56) du conduit de mélange (5) et permettre au fluide d'échappement (10) à s'écouler de l'interstice (53) au travers de l'ouverture (52) dans la paroi latérale (42, 56) dans le conduit de mélange (5), dans lequel l'étape de pourvoir une configuration de mélangeur (3) dans le conduit de mélange (5) comprend pourvoir d'éléments de mélange (31) dirigeant de la paroi latérale (42, 56) du conduit de mélange (5) vers l'intérieur du conduit de mélange (5), et
- pourvoir l'interstice (53) avec une ouverture de sortie (51) à une extrémité aval de l'interstice (53) et guider le fluide d'échappement (10) le long de la longueur du conduit de mélange (5) et hors de l'interstice (53) au niveau de l'ouverture de sortie (50).

6. Procédé selon la revendication 5, dans lequel l'étape d'injection d'une substance chimique (20) comprend l'injection de la substance chimique en amont de la configuration de mélangeur (3).

7. Procédé selon l'une quelconque des revendications 5 à 6, dans lequel l'étape d'injection d'une substance chimique (20) comprend l'injection d'urée ou d'ammoniaque.
